# EUROPÄISCHE PATENTSCHRIFT

(11) **EP 0 770 164 B1**
(45) Veröffentlichungstag und Bekanntmachung des Hinweises auf die Patenterteilung: **14.01.1998**
(21) Anmeldenummer: 95913172.3
(22) Anmeldetag: 30.03.1995
(51) Int. Cl.: E02F 3/96, E04G 23/08

(54) **BETONBRECHZANGE**
CONCRETE BREAKING PLIERS
PINCE A BROYER LE BETON

(30) Priorität: 13.07.1994 DE 4424740
(43) Veröffentlichungstag der Anmeldung: 02.05.1997
(73) Patentinhaber: SCHILLING-OSTERMEYER MASCHINENBAU GMBH, D-88448 Oggelsbeuren (DE)
(72) Erfinder: OSTERMEYER, Thomas, D-88400 Biberach (DE)
(74) Vertreter: Prüfer, Lutz H., Dipl.-Phys.
(86) Internationale Anmeldenummer: EP9501191
(87) Internationale Veröffentlichungsnummer: WO9602708

(56) Entgegenhaltungen:
- EP-A- 0 634 242
- DE-A- 3 332 022
- DE-A- 3 618 191
- DE-A- 4 013 126
- US-A- 5 060 378

## Beschreibung

Die Erfindung betrifft eine Betonbrechzange nach dem Oberbegriff des Anspruches 1. Eine solche Betonbrechzange ist aus der DE 36 18 191 C2 bekannt.

Aus der DE 40 13 126 A1 ist einen Betonbbrechzange bekannt, die eine feststehende, rahmenartige erste Zangenbacke, die eine Schneideinrichtung mit mehreren ersten Schneiden aufweist, und eine zweite Zangenbacke, die eine Schneideinrichtung mit mehreren zweiten Schneiden aufweist und mit der ersten Zangenbacke um ein Gelenk schwenkbar verbunden ist, aufweist, wobei die erste Zangenbacke einen Betonbrechabschnitt, der gegenüber den ersten Schneiden in Richtung der zweiten Zangenbacke hervorsteht, und die zweite Zangenbacke einen Betonbrechabschnitt, der gegenüber den zweiten Schneiden in Richtung der ersten Zangenbacke hervorsteht, aufweist und im Betrieb zunächst die beiden Betonbrechabschnitte zum Brechen des Betons und anschließend die Schneiden zum Schneiden von Armierungen zusammenwirken.

Probleme bestehen bei den bekannten Betonbrechzangen in der Gefahr, daß sich gebrochenes Material in den Zangenbacken verklemmt und so zu einer Unterbrechung des Arbeitsvorgangs und/oder aufgrund der auftretenden Verwindungskräfte zu einem erhöhten Verschleiß der bewegten bzw. der brechenden und schneidenen Teile der Betonbrechzange führt, weiter in der im wesentlichen undefinierten Verteilung der Armierungsstreben beim Schneiden und der nicht zuletzt dadurch auftretenden Gefahr von durch eingeklemmte Armierungsstreben blockierten Betonbrechzangen oder sich sich stark ändernder Schnittspalte und daraus resultierendem erhöhtem Verschleiß der Schneiden.

Aufgabe der Erfindung ist es, eine gattungsgemäße Betonbrechzange mit einer Trennung von Betonbrech- und Schneidfunktion und erhöhter Zuverlässigkeit, die den Verschleiß der brechenden und schneidenden Teile minimiert, anzugeben.

Diese Aufgabe wird gelöst durch eine Betonbrechzange nach Anspruch 1.

Bei der Betonbrechzange werden geringere Schnittspaltänderungen durch eine erhöhte Stabilität der ersten Zangenbacke und eine Trennung der Funktion des Betonbrechens und des Armierungsschneidens dadurch, daß bei den beiden Zangenbacken jeweils der Betonbrechabschnitt in Richtung der jeweiligen anderen Zangenbacke gegenüber ihrer Schneide hervorsteht, wodurch der Beton im wesentlichen gebrochen ist, bevor die Schneiden der beiden Backen die Armierung zerschneiden, erreicht. Dadurch kann der Verschleiß der Schneiden, der durch die hohe Härte der im Beton enthaltenen Quarze und Silikate verursacht würde, wenn die Schneiden wesentlich an dem Vorgang des Betonbrechens beteiligt wären, verringert werden. Die Schneiden können daher aus einem speziell für das Schneiden geeignetem Material in einer an das Schneiden angepaßten Form ausgebildet werden, während die Betonbrechabschnitte an das Brechen des Betons angepaßt werden können. Der sich erweiternde Innenraum verhindert das Verklemmen von gebrochenem Material in der ersten Zangenbacke.

Weiterbildungen der Erfindungen sind in den Unteransprüchen angegeben.

Es wird durch die spezielle Anordnung der Vorsprünge und konkaven Abschnitte eine verbesserte Auffächerung der Armierung und ein sukzessives Schneiden der Armierung erreicht.

Weitere Merkmale und Zweckmäßigkeiten der Erfindung ergeben sich aus der Beschreibung von Ausführungsbeispielen. Von den Figuren zeigen:
- Fig. 1: eine Seitenansicht einer ersten Ausführungsform einer Betonbrechzange mit einem zwischen den Zangenbacken schematisch dargestellten Betonblock,
- Fig. 2: eine perspektivische Aansicht der ersten Ausführungsform,
- Fig. 3: eine Schnittansicht der Schneide der ersten Zangenbacke und von deren Umgebung in Richtung des Pfeiles III aus Fig. 2,
- Fig. 4: eine Schnittansicht der Schneide der zweiten Zangenbacke und von deren Umgebung in Richtung des Pfeiles IV aus Fig. 2,
- Fig. 5: eine Schnittansicht einer weiteren Ausführungsform einer Schneide,
- Fig. 6: eine Prinzipdarstellung einer verbesserten Auffächerung der Armierung, und
- Fig. 7A-D: eine Seitenansicht einer zweiten Ausführungsform mit einer Prinzipdarstellung des Auffächerns und des sukzessiven Schneidens der Armierung in vier Darstellungen mit abnehmendem Öffnungswinkel zwischen den Zangenbacken.

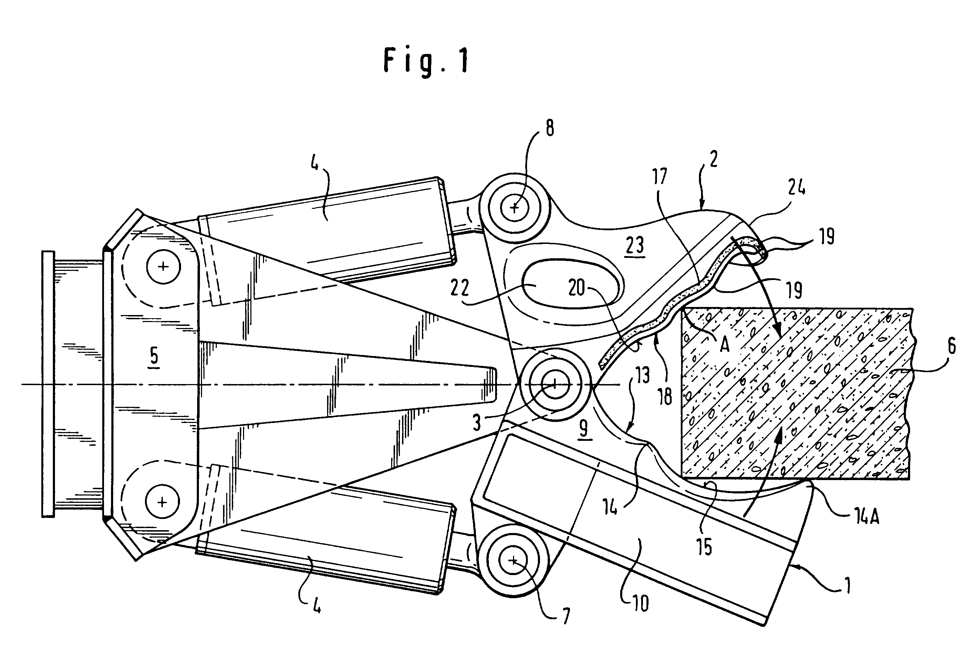

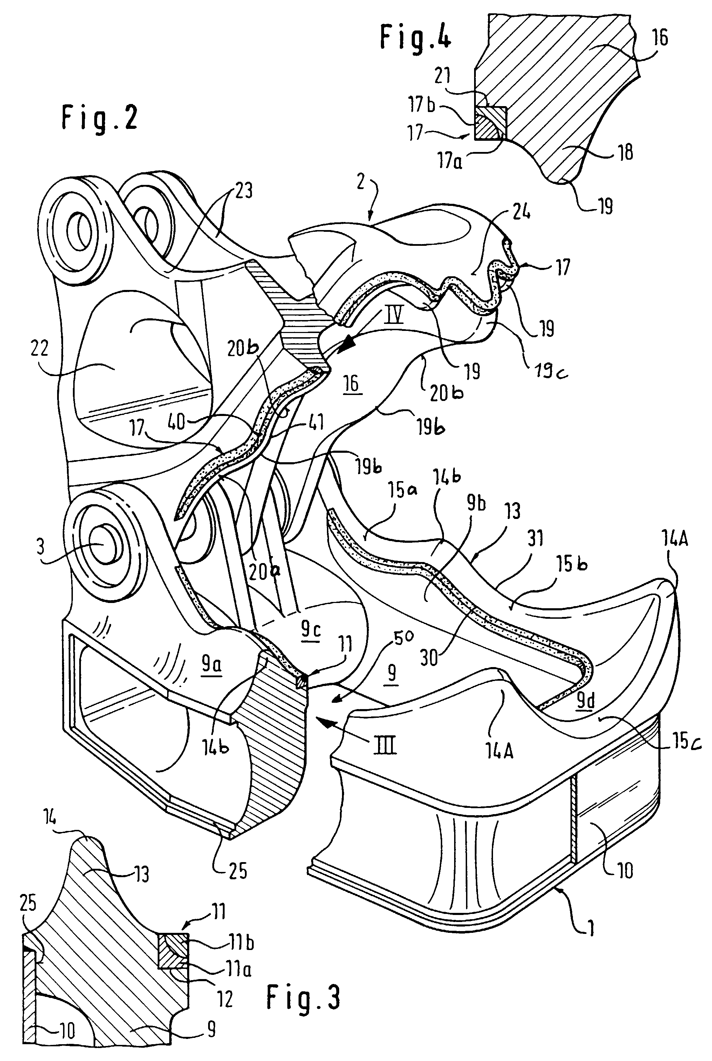

In Fig. 1 ist eine Ausführungsform der Betonbrechzange als Seitenansicht dargestellt. Die Betonbrechzange weist eine erste Zangenbacke 1, die (wie in Fig. 2 dargestellt ist) rahmenförmig ausgebildet ist, und eine zweite Zangenbacke 2, die mit der ersten Zangenbacke 1 um ein Gelenk 3 schwenkbar verbunden ist, auf. Hubzylinder 4 sind jeweils an einem ihrer Enden mit einem Kopplungsstück 5 verbunden. Das Kopplungsstück 5 dient zum Ankoppeln der Betonbrechzange an einen Geräteträger, wie den Schwenkarm eines Baggers oder ähnliches. Die Hubzylinder 4 sind an ihrem jeweiligen anderen Ende mit einem Anlenkpunkt 7 der ersten Zangenbacke 1 bzw. einem Anlenkpunkt 8 der zweiten Zangenbacke 2 verbunden. Durch Betätigen der Hubzylinder 4 derart, daß der Abstand zwischen ihren beiden Enden vergrößert wird, schwenken die Zangenbacken 1, 2 um das Gelenk 3 in Richtung der in Fig. 1 dargestellten Pfeile. Ein Betonblock 6, der in Fig. 1 schematisch dargestellt ist, wird durch diese Schwenk- bzw. Zangenbewegung der Zangenbacken 1, 2 gebrochen. Das gebrochene Material, d.h. der gebrochene Beton und die zerschnittene Armierung, wird aufgrund der Schwenkbewegung der Zangenbacken 1, 2 beim Brechen und Schneiden durch die rahmenförmige erste Zangenbacke 1 hindurchgeschoben. Das gebrochene Material wird auf der Unterseite der ersten Zangenbacke 1 , d.h. auf der der zweiten Zangenbacke 2 abgewandten Seite der ersten Zangenbacke 1 ausgeschoben.

In Fig. 2 ist die Ausführungsform der Betonbrechzange perspektivisch dargestellt. Die erste Zangenbacke 1 weist einen Grundkörper 9 auf, der bei dieser Ausführungsform als Gußteil ausgebildet ist. Der rahmenförmige Grundkörper 9 weist zwei seitliche Abschnitte 9a, 9b, einen gelenkseitigen Abschnitt 9c und einen dem gelenkseitigen Abschnitt gegenüberliegenden vorderen Abschnitt 9d, die einen trichterartigen Innenraum 50 umgeben bzw. begrenzen, auf. Der Innenraum 50 ist zu der Oberseite, d.h. der der zweiten Zangenbacke 2 zugewandten Seite der ersten Zangenbacke 1 und zu der Unterseite der ersten Zangenbacke 1 hin offen. Der Innenraum 50 erweitert sich von der Oberseite in Richtung der Unterseite, so daß von einer trichterartigen Innenwandung der ersten Zangenbacke 1 umgeben ist. Wie in dem Schnitt durch den Seitenabschnitt 9a in Fig. 2 dargestellt ist, weisen die Abschnitte 9a bis 9d des Grundkörpers 9 einen im wesentlichen C-förmigen Querschnitt auf. Bei dem gelenkseitigen Abschnitt 9c ist der im wesentlichen C-förmige Querschnitt zu einem O-förmigen Querschnitt weitergebildet, wie in Fig. 2 dargestellt ist, so daß der gelenkseitige Abschnitt 9c als Torsionskasten wirkt, der die von dem mit der ersten Zangenbacke 1 verbundenen Hubzylinder 4 eingeleiteten Kräfte an die Seitenabschnitte 9a, 9b weiterleitet. Der C-förmige Querschnitt führt zu einer Gewichts-, Material- und Kostenersparnis und gleichzeitig zu einer erhöhten Steifigkeit des rahmenförmigen Grundkörpers 9.

Diese Steifigkeit wird bei der Ausführungsform der Betonbrechzange dadurch weiter erhöht, daß um den Grundkörper 9 herum an den Enden der Schenkel des C-förmigen Querschnitts eine Phase 25 ausgebildet ist, so daß Platten 10 in diese Phase eingesetzt und mit dem Grundkörper verschweißt werden, so daß der C-förmige Querschnitt zu einem D-förmigen Querschnitt (Kastenprofil) geschlossen wird, der die weiter erhöhte Steifigkeit ermöglicht. In Fig. 2 ist am vorderen Abschnitt 9d eine solche Platte 10 dargestellt und in Fig. 1 ist der Zustand der einsatzbereiten Betonbrechzange dargestellt, in dem die Platten 10 die C-förmigen Ausnehmungen des Grundkörpers 9 vollständig abdecken.

Die erste Zangenbacke 1 weist an der Oberseite ihres Grundkörpers 9 eine an der dem trichterartigen Innenraum 50 zugewandten Innenseite der Seitenabschnitte 9a, 9b und des vorderen Abschnittes 9d verlaufende Schneide 11 auf. Die Schneide 11 ist in einem Schneidenbett 12 aufgenommen. Auf der der zweiten Zangenbacke 2 zugewandten Oberseite des Grundkörpers 9 der ersten Zangenbacke 1 ist auf den Seitenabschnitten 9a, 9b und dem vorderen Abschnitt 9d umlaufend ein Betonbrechabschnitt 13 ausgebildet. Der Betonbrechabschnitt 13 steht in Richtung der zweiten Zangenbacke 2 gegenüber der Schneide 11 vor. Bei dieser Ausführungsform sind gegenüber einer ersten Ebene durch die Schwenkachse des Gelenks 3 und irgendeinen Punkt 30 der Schneide 11 der ersten Zangenbacke 1 alle Punkte (mindestens aber ein Punkt 31) des Betonbrechabschnittes 13 der ersten Zangenbacke 1, die in einer zu der Schwenkachse 3 des Gelenks 3 paralellen, zu der ersten Ebene senkrechten und durch den Punkt 30 der Schneide 11 verlaufenden zweiten Ebene liegen und der zweiten Zangenbacke 2 zugewandt sind, in Richtung der Schwenkbewegung auf die zweite Zangenbacke 2 gesehen vor der ersten Ebene angeordnet.

Der Betonbrechabschnitt 13 der ersten Zangenbacke 1 weist auf jedem der Seitenabschnitte 9a, 9b jeweils zwei konkave Abschnitte 15, die durch einen Vorsprung 14, der im Folgenden als Zahn 14 bezeichnet wird, in einem stetigen Verlauf verbunden sind, auf. Bei dieser Ausführungsform ist an der Verbindung der Seitenabschnitte 9a, 9b mit dem vorderen Abschnitt 9d in den Betonbrechabschnitt 13 je ein in Richtung der zweiten Zangenbacke weit vorstehender Vorsprung bzw. Zahn 14A ausgebildet. Die Zähne 14A sind schalenförmig so ausgebildet, daß sie auf die Außenseite des Rahmens hin gewölbt sind. Zwischen den beiden Zähnen 14A ist ein konkaver Abschnitt 15c ausgebildet. Die Form des Betonbrechabschnittes 13 ist an die durch Abrasion beim Betonbrechen entstehende Form angepaßt. Das bedeutet, daß sowohl die Innenseiten als auch die Außenseiten des Betonbrechabschnittes eine abgerundete Form aufweisen.

Die abgerundete Form des Betonbrechabschnittes 13 bzw. der Zähne 14 und der konkaven Abschnitte 15 führt zu einem geringeren Verschleiß des Betonbrechabschnittes beim Betonbrechen. Die sich auf die der zweiten Zangenbacke abgewandten Seite öffnende Trichterform des Grundkörpers 9 ermöglicht, daß gebrochene Betonteile und zerschnittene Armierungsteile sich nicht an der Innenseite des rahmenförmigen Grundkörpers 9 verkeilen und daher leicht in Richtung der der zweiten Zangenbacke 2 abgewandten Seite der ersten Zangenbacke 1 ausgestoßen bzw. ausgeschoben werden können. Dadurch wird sichergestellt, daß der Arbeitsvorgang nicht durch in der rahmenförmigen ersten Zangenbacke 1 verkeiltes oder verklemmtes Material unterbrochen wird. Daher können die gebrochenen Betonteile und zerschnittenen Armierungsteile in einem Arbeitsvorgang kontinuierlich ausgeschoben werden.

Die zweite Zangenbacke 2 weist einen Grundkörper 16 auf, der bei dieser Ausführungsform der Betonbrechzange als ein Gußteil ausgebildet ist. Der Grundkörper 16 der zweiten Zangenbacke ist über das Gelenk 3 mit dem Grundkörper 9 der ersten Zangenbacke 1 schwenkbar verbunden. Der Grundkörper 16 ist so ausgebildet, daß er bei der Schwenkbewegung zum Betonbrechen und Armierungsschneiden in den rahmenförmigen Grundkörper 9 der ersten Zangenbacke 1 eintaucht, wobei die der ersten Zangenbacke 1 zugewandte Seite des Grundkörpers 16 eine geschlossenen erste Fläche aufweist. Am Rand der ersten Fläche des Grundkörpers 16 der zweiten Zangenbacke 2 ist eine Schneide 17 ausgebildet. Der Grundkörper 16 weist auf der ersten Fläche einen Betonbrechabschnitt 18 auf, der gegenüber der Schneide 17 in Richtung der ersten Zangenbacke 1 hervorsteht. Bei dieser Ausführungsform sind gegenüber einer dritten Ebene durch die Schwenkachse des Gelenks 3 und irgendeinen Punkt 40 der Schneide 17 der zweiten Zangenbacke 2 alle Punkte (mindestens aber ein Punkt 41) des Betonbrechabschnittes 18 der zweiten Zangenbacke 2, die in einer zu der Schwenkachse 3 des Gelenks 3 parallelen, zu der dritten Ebene senkrechten und durch den Punkt 40 der Schneide 17 verlaufenden vierten Ebene liegen und der ersten Zangenbacke 1 zugewandt sind, in Richtung der Schwenkbewegung auf die erste Zangenbacke 1 gesehen vor der dritten Ebene angeordnet.

Der Betonbrechabschnitt 18 weist in ähnlicher Weise wie der Betonbrechabschnitt 13 Vorsprünge bzw. Zähne 19 und konkave Abschnitte 20 auf, wobei der Grundkörper 16 an der den Seitenabschnitten 9a, 9b der ersten Zangenbacke 1 gegenüberliegenden Abschnitten des Betonbrechabschnittes 18 jeweils ebenfalls drei durch je einen Zahn 19 in stetigem Verlauf verbundene konkave Abschnitte 20 aufweist, während der Grundkörper 16 an einer dem Gelenk gegenüberliegenden Vorderseite 24 drei Zähne 19, die durch entsprechende konkave Abschnitte 20 in stetigem Verlauf verbunden sind, aufweist. Der mittlere der drei Zähne steht in Richtung der ersten Zangenbacke 1 weiter vor als die beiden benachbarten Zähne. Die Schneide 17 ist in einem Schneidenbett 21, das außen an der der ersten Zangenbacke 1 gegenüberliegenden Seite des Grundkörpers 16 (d.h. am Rand der ersten Fläche) ausgebildet ist, aufgenommen.

Wie in Fig. 1 am besten zu erkennen ist, werden bei einer Betätigung der Hubzylinder 4, so daß der Abstand zwischen ihren Enden vergrößert wird, die erste Zangenbacke 1 und die zweite Zangenbacke 2 um das Gelenk 3 in Richtung der in Fig. 1 dargestellten Pfeile geschwenkt. Ein zu brechendes Betonteil 6 wird dabei durch den Betonbrechabschnitt 13 mit den Zähnen 14 und den konkaven Abschnitten 15 der ersten Zangenbacke 1 und durch den Betonbrechabschnitt 18 mit den Zähnen 19 und den konkaven Abschnitten 20 der zweiten Zangenbacke 2 gebrochen. Wie in der Seitenansicht in Fig. 1 gut zu erkennen ist, kommt dabei die Schneide 17 der zweiten Zangenbacke 2 mit dem Betonteil 6 nicht zum Brechen desselben in Kontakt. Die Schneide 17 kommt allenfalls mit bereits im wesentlichen gebrochenen Stücken des Betonteiles 6, die noch an der Armierung anhaften, in Kontakt. In ähnlicher Weise kommt die Schneide 11 der ersten Zangenbacke 1 nicht zum Brechen mit dem Betonteil 6 in Kontakt. Die Schneide 11 der ersten Zangenbacke 1, die gegenüber dem Betonteil 6 hinter dem Betonbrechabschnitt 13 zurücksteht, wie am besten in den Schnitten in Fig. 2 und Fig. 3 zu erkennen ist, kommt ebenfalls nur mit den bereits gebrochenen Stücken des Betonteiles 6, die durch den rahmenförmigen Grundkörper 9 und genauer durch dessen trichterartigen Innenraum 50 durch die Bewegung der Zangenbacke 2 herausgeschoben werden, in Kontakt. Bei der vorliegenden Ausführungsform wird dieser Effekt durch die weiter oben beschriebene Anordnung der Schneiden und der Betonbrechabschnitte erreicht.

Nachdem der Beton im wesentlichen gebrochen ist, wird bei der weiteren Schwenkbewegung der Zangenbacken um das Gelenk 3 die Armierung durch die Anordnung der Zähne 14, 19 und der konkaven Abschnitten 15, 20 aufgefächert und von den zusammenwirkenden Schneiden 11, 17 zerschnitten. Während der Schwenkbewegung wird das bereits gebrochene Material kontinuierlich durch den trichterartigen Innenraum 50 der ersten Zangenbacke 1 geschoben und an deren Unterseite ausgestoßen. Der durch den trichterartigen Innenraum 50 ermöglichte kontinuierliche Materialausstoß führt dazu, daß das nachfolgend noch näher beschriebene Auffächern und Zerschneiden der Armierung nicht durch blockierendes gebrochenes Material gestört wird.

Das Zerschneiden der Armierung wird im Folgenden näher erläutert. Bei der Schwenkbewegung der Zangenbacken 1, 2 um das Gelenk 3 werden sowohl die parallel zu der Achse des Gelenkes 3 verlaufenden Teile der Armierung durch die auf den Seitenabschnitten 9a, 9b und die entsprechenden auf dem Grundkörper 16 ausgebildeten Zähne und konkaven Abschnitten als auch die senkrecht zu der Achse des Gelenkes 3 verlaufenden Teile der Armierung durch die auf dem vorderen Abschnitt 9d und der Vorderseite des Grundkörpers 16 ausgebildeten Zähne und die konkaven Abschnitten aufgefächert. Durch das Auffächern werden die einzelnen Teile bzw. Streben oder Drähte der Armierung in Pakete unterteilt, die dadurch, daß die Schneiden 11 und 17 durch die Schwenkbewegung um das Gelenk 3 nicht gleichzeitig über ihre gesamte Länge schneiden, in verschiedenen Stufen der Schwenkbewegung zerschnitten werden. Die Zähne und konkaven Abschnitte der Betonbrechabschnitte 13, 18 ermöglichen also nicht nur eine punktuell große Belastung des zu brechenden Betons, sondern sie erleichtern gleichzeitig durch ihre auffächernde Wirkung auf die Betonarmierung das Zerschneiden der Armierung.

Der Grundkörper 16 der zweiten Zangenbacke 2 ist in seiner Form an die beim Betonbrechen und Armierungsschneiden auftretenden Kräfte angepaßt. Wie am besten in der Seitenansicht in Fig. 1 zu erkennen ist, werden beim Betonbrechen im wesentlichen an drei Punkten Kräfte in den Grundkörper 16 eingeleitet. Dieses sind das Gelenk 3, der Anlenkpunkt 8 und ein Berührungspunkt A zwischen Grundkörper 16 und Betonteil 6. Dabei treten zwischen dem Gelenk 3 und dem Anlenkpunkt 8 bzw. dem Berührungspunkt A jeweils Zugkräfte auf, während zwischen dem Anlenkpunkt 8 und dem Berührungspunkt A eine Druckkraft auftritt. Die Wirkungslinien dieser Kräfte verlaufen, wie in Fig. 1 gut zu erkennen ist, vollständig im Material des Grundkörpers 16. Die in den Fig. 1 und 2 dargestellte Ausnehmung 22, die einen im wesentlichen O-förmigen Querschnitt aufweist, schneidet diese Wirkungslinien im wesentlichen nicht. Die beim Betonbrechen und Armierungsschneiden auftretenden Kräfte werden im wesentlichen über den Betonbrechabschnitt 18 und die Schneide 17 in den Grundkörper 16 eingeleitet. Der Grundkörper 16 ist so ausgebildet, daß in der Ebene der Schwenkbewegung um das Gelenk 3 in Richtung der der Zangenbacke 1 abgewandten Seite hinter dem Betonbrechabschnitt 18 und der Schneide 17 zwei parallele plattenförmige Abschnitte 23 des Grundkörpers 16 ausgebildet sind. Diese plattenförmigen Abschnitte 23 verlaufen ebenfalls entlang der Wirkungslinie der eingeleiteten Druckkraft. Durch diese Ausbildung ist der Grundkörper 16 bei gleichzeitiger Gewichts-, Material- und Kostenersparnis sehr formstabil.

Die verbesserte Formstabilität des rahmenförmigen Grundkörpers 9 der ersten Zangenbacke 1 und des Grundkörpers 16 der zweiten Zangenbacke 2 ermöglicht eine weitere Verminderung des Verschleißes der Schneiden. Die enorm großen beim Betonbrechen und Armierungsschneiden auftretenden Kräfte führen zu Verformungen der Zangenbacken, wodurch sich der Schnittspalt zwischen den Schneiden 11 und 17 beim Armierungsschneiden ändert. Eine solche Änderung führt zu einem erhöhten Verschleiß der Schneidkanten. Da die Formstabilität der Zangenbacken 1, 2 der Betonbrechzange sehr hoch ist, treten keine oder nur geringe Änderungen des Schnittspaltes beim Armierungsschneiden auf.

Aufgrund der oben beschriebenen Ausbildung der Betonbrechabschnitte 13, 18 und der Schneiden 11, 17 der Zangenbacken wird eine Trennung der Funktionen des Betonbrechens und des Armierungsschneidens erreicht. Die Grundkörper 9, 16 der ersten und der zweiten Zangenbacke 1, 2 sind als Gußteile in vergütetem Stahlguß ausgebildet. Die Härte der in vergütetem Stahlguß ausgebildeten Grundkörper 9, 16 beträgt ca. 400 bis 450 HV (Härte Vickers). Die im Beton enthaltenen Quarze und Silikate weisen eine Härte von ca. 800 HV auf. Die Betonbrechabschnitte 13, 18 der Grundkörper 9, 16 sind daher zur Verbesserung des Verschleißverhaltens höher vergütet. Bei der beschriebenen Ausführungsform werden die Betonbrechabschnitte durch Aufschweißen mindestens einer Schicht aus einem Material mit HV ≧ 700 vergütet. Nach einer anderen Ausführungsform werden mehrere Schichten aus Materialien mit steigendem Härtegrad nacheinander auf den Brechabschnitten 13, 18 aufgeschweißt, so daß die beim Brechen auftretenden Kräfte gleichmäßiger auf das Gußteil übertragen werden, und so die aufgetragene Schicht nicht abplatzt. Dazu wird beispielsweise eine erste Schicht (Pufferschicht) mit 500 HV aus Chrom in einer Dicke von ca. 2 - 3 mm und danach eine zweite Schicht mit 700 HV aus Wolframkarbid in Chrommatrix mit einer Dicke von ca. 4 mm aufgetragen. Allgemein sind als Materialien für solche Schichten, die auch mehr als zwei Schichten sein können, Metallkarbide und insbesondere Chrom-, Niob-, Wolframkarbide und ähnliches geeignet. Die oberste Schicht einer solchen Vergütung der Betonbrechabschnitte kann nach einer weiteren Ausführungsform bis über 800 HV aufweisen.

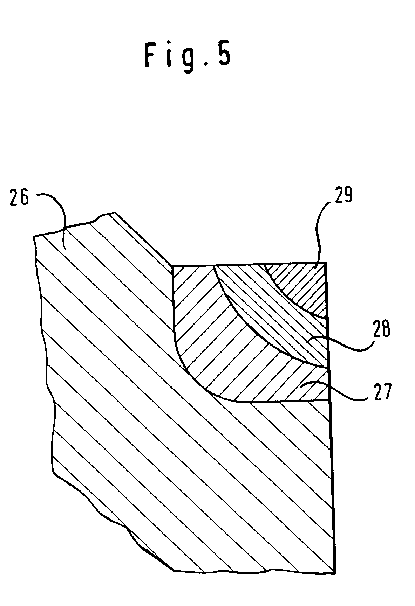

An die Schneiden wird einerseits zum Erzielen einer ausreichenden Verschleißfestigkeit die Forderung einer möglichst großen Härte gestellt, andererseits ist zum Ableiten der hohen beim Armierungsschneiden auftretenden Kräfte eine ausreichende Zähigkeit des Materials notwendig. Daher verwenden die Ausführungsformen der Betonbrechzange Schneiden mit einem Härtegrad von 500 - 600 HV, üblicherweise ca. 550 HV. Damit die hohen beim Schneiden auftretenden Kräfte gut über die Schneidenbetten 12, 21 in die Grundkörper 9 bzw. 16 abgeleitet werden können, sind die Schneiden nach einer weiteren Ausführungsform mehrschichtig aufgebaut. Bei der in Fig. 3 und 4 im Schnitt dargestellten Ausführungsform ist der Schneidenaufbau zweischichtig. Auf dem Schneidenbett des Gußteiles 9, 16, das eine Härte von ca. 400 - 450 HV aufweist, ist eine erste Schicht 11a, 17a (Haftvermittler und Tragschicht) mit einer Härte von ca. 500 HV aufgeschweißt, und darauf ist die Schneidkante 11b, 17b mit einer Härte von ca. 550 HV aufgeschweißt. Diese aufgeschweißten Schichten werden zur Ausbildung der Schneide nachbehandelt.

In Fig. 5 ist eine weitere Ausführungsform der Schneide dargestellt, bei der das Schneidenbett eine abgerundete Form aufweist, und darauf die Schneide in einem dreischichtigen Aufbau aufgeschweißt ist. Auf den Grundwerkstoff 26, d.h. das Gußteil, mit einer Härte von ca. 400 - 450 HV wird eine erste Schicht (Haftvermittler 27) mit einer Härte von 450 - 500 HV aufgetragen, darauf wird eine zweite Schicht (Tragschicht 28) mit einer Härte von 500 - 550 HV aufgetragen, und auf die Tragschicht wird die Schneidkante 29 mit einer Härte von ca. 550 HV aufgetragen.

Die wie oben beschriebenen Schneiden können sich nicht lockern und haben unabhängig von der Trennung der Betonbrechabschnitte und der Schneiden höhere Standzeiten, da die beim Schneiden auftretenden Kräfte sehr gleichmäßig in den Grundwerkstoff abgeleitet werden. Zudem kann das Material der Schneidkanten durch Aufschweißen erneuert bzw. ausgebessert und nachgearbeitet werden, so daß die Schneidkanten mit einem relativ niedrigen Aufwand gewartet werden können.

Wie in Fig. 1 zu erkennen ist, sind die Ecken auf der Innenseite des rahmenförmigen Grundkörpers 9 abgerundet, so daß beim Durchdrücken des gebrochenen Materials , d.h. des gebrochene Betons bzw. der geschnittenen Armierungsteile erstens ein geringerer Verschleiß in diesen Ecken und zweitens geringere den Grundkörper verwindende Kräfte auftreten. Dadurch wird zusätzlich zu der bereits beschriebenen Form des Rahmens mit sich erweiterndem Querschnitt des eingeschlossenen Raumes und der bereits beschriebenen C-Form des Querschnittes eine weiter erhöhte Formstabilität des Grundkörpers 9 der ersten Zangenbacke 1 erreicht.

Wie erneut in der Fig. 1 am besten zu erkennen ist, ist auch die Form der ersten Zangenbacke 1 an das beim Brechen des Betons und dem Armierungsschneiden auftretende Kraftdreieck zwischen dem Gelenk 3, dem Anlenkpunkt 7 und dem bzw. den Berührungspunkten zwischen der Zangenbacke 1 und dem Betonteil 6 angepaßt. Obwohl die O-förmige Ausnehmung in dem gelenkseitigen Abschnitt 9c des Grundkörpers 9 in Fig. 1 durch die Platte 10 verdeckt ist, ist auch hier in Fig. 1 deutlich zu erkennen, daß im wesentlichen entlang der Wirkungslinien der auftretenden Kräfte das Material des Grundkörpers 9 ausgebildet ist.

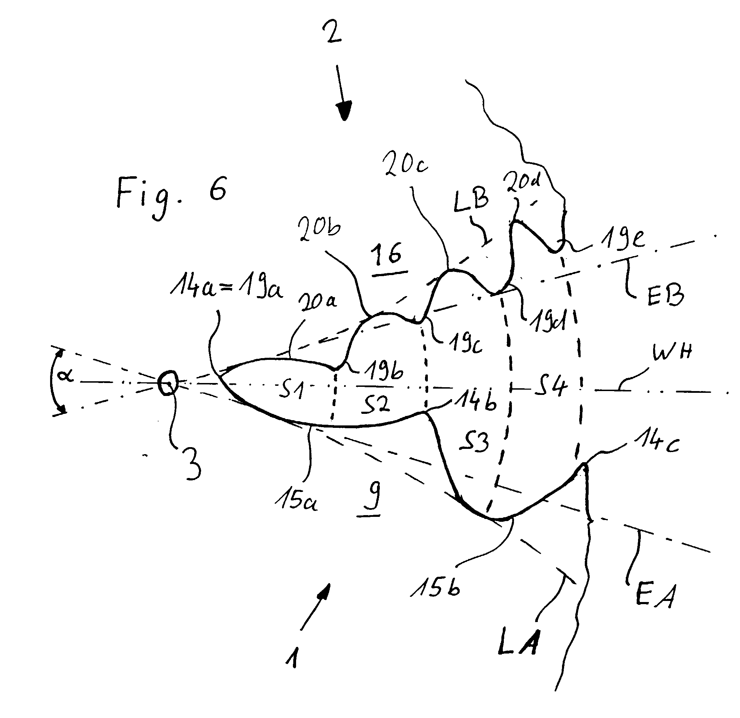

Das Prinzip einer verbesserten Auffächerung der Armierung wird unter Bezugnahme auf die Prinzipdarstellung in Fig. 6 erläutert.

In Fig. 6 sind schematisch die Grundkörper 9, 16 von erster und zweiter Schneidbacke 1, 2 mit entsprechenden Vorsprüngen 14a bis 14c bzw. 19a bis 19e und entsprechenden konkaven Abschnitten 20a bis 20d bzw. 15a und 15b in einer Seitenansicht dargestellt. Die Betonbrechabschnitte von erster und zweiter Zangenbacke sind bezüglich einer senkrecht zu der Achse des Gelenks 3 und mittig durch die Zangenbacken verlaufenden Ebene symmetrisch ausgebildet, wie z.B. in Fig. 2 gut zu erkennen ist. Daher sind entsprechend zu den in Fig. 6 gezeigten Vorsprüngen 14a-c, 19a-e und konkaven Abschnitten 15a-b, 20a-d die selben Vorsprünge 14a-c, 19a-e und konkaven Abschnitte 15a-b, 20a-d auf der (in Fig. 6 nicht gezeigten) symmetrischen anderen Hälfte der Zangenbacken 1, 2 ausgebildet.

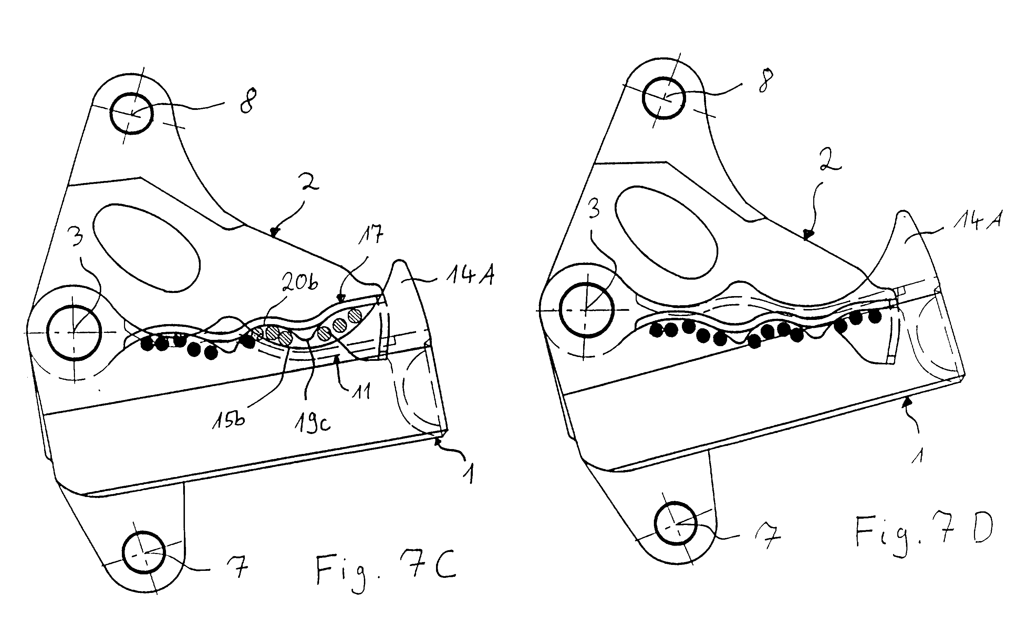

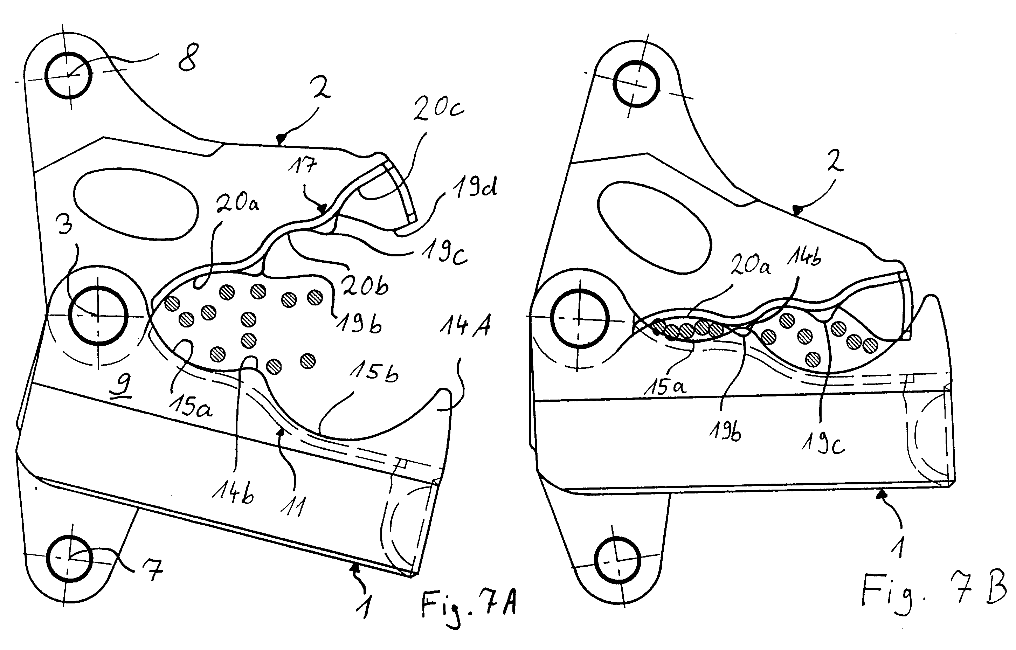

Zum Erreichen einer gleichmäßigen Schneidleistung über die gesamte Länge der senkrecht zur Achse des Gelenkes 3 verlaufenden Abschnitte der Schneiden 11, 17 ist es (Fig. 1, 7), da die in den Anlenkpunkten 7, 8 eingeleitete Kraft im wesentlichen über die gesamte Schwenkbewegung der Zangenbacken 1, 2 konstant ist, notwendig, daß aufgrund der entsprechend dem Hebelgesetz antiproportional zum zunehmenden Abstand von der Achse des Gelenkes 3 tatsächlich an den Schneiden 11, 17 wirkenden Schneidkraft die Zahl der im wesentlichen gleichzeitig zu schneidenden Armierungen (Armierungsstränge) ebenfalls antiproportional zu der Entfernung von der Gelenkachse ist.

Eine solche Auffächerung und gleichmäßige Schneidleistung wird, wie in Fig. 6 gezeigt ist, prinzipiell dadurch erreicht, daß bei mindestens einer der beiden Zangenbacken 1, 2 (in Fig. 6 ist dies für beide Zangenbacken dargestellt) der Abstand der tiefsten Punkte der konkaven Abschnitte 15 bzw. 20 einer Zangenbacke 1 bzw. 2 von einer Ebene bzw. Tangente durch das Gelenk 3 und die tiefsten Punkte der dem Gelenk 3 am nächsten liegenden konkaven Abschnitte 15a bzw. 20a einer Zangenbacke 1 bzw. 2 in der der jeweiligen anderen Zangenbacke 2 bzw. 1 abgewandten Richtung mit zunehmendem Abstand der konkaven Abschnitte von dem Gelenk 3 ebenfalls zunimmt. In Fig. 6 ist die entsprechende Ebene für die erste Zangenbacke durch die mit EA bezeichnete gestrichelte Tangente mit abwechselnd kurzen und langen Strichen dargestellt, während die entsprechende Ebene für die zweite Zangenbacke durch die mit EB bezeichnete strichpunktierte Tangente dargestellt ist. Die tiefsten Punkte der konkaven Abschnitte 15a und 15b der ersten Zangenbacke 1 liegen auf der mit LA bezeichneten gestrichelten Linie (Hüllkurve) und die tiefsten Punkte der konkaven Abschnitte 20a bis 20d der zweiten Zangenbacke liegen auf der mit LB bezeichneten gestrichelten Linie (Hüllkurve). Wie in Fig. 6 dargestellt ist, nimmt der Abstand der tiefsten Punkte von den entsprechenden Ebenen mit zunehmendem Abstand von dem Gelenk 3 bevorzugterweise nicht linear sondern mit wachsendem Gradienten zu. Das ist in Fig. 6 durch die Krümmung der Linien LA, LB dargestellt.

Allgemeiner ausgedrückt bedeutet das, daß eine Hüllkurve durch die Achse des Gelenks 3, die die konkaven Abschnitte 15 der ersten Zangenbacke 1 tangiert und die durch die Linie LA in Fig. 6 dargestellt ist, bei mit einem beliebigen Öffnungswinkel zwischen den Tangenten EA, EB geöffneter Brechzange einen mit zunehmendem Abstand von der Achse des Gelenks 3 in einer zu der Achse des Gelenkes senkrechten Richtung größeren, d.h. zunehmenden Abstand von der Winkelhalbierenden WH des Öffnungswinkels aufweist. Der selbe Sachverhalt gilt für die in Fig. 6 mit LB bezeichnet Hüllkurve durch die Achse des Gelenks 3, die die konkaven Abschnitte 20 der zweiten Zangenbacke 2 tangiert, und die ebenfalls bei mit einem beliebigen Öffnungswinkel α zwischen den Tangenten EA, EB geöffneter Brechzange einen mit zunehmendem Abstand von der Achse des Gelenks 3 in einer zu der Achse des Gelenkes senkrechten Richtung größeren, d.h. zunehmenden Abstand von der Winkelhalbierenden WH des Öffnungswinkels α aufweist.

Wie in Fig. 6 durch die gestrichelten Linien, die die Bewegung der Vorsprünge 19b bis 19e beim Schließen der Zange andeuten, gezeigt ist, wird der zwischen den geöffneten Zangenbacken befindliche Raum durch diese Schwenkbewegung in Sektoren (im folgenden Schnittsektoren genannt) unterteilt. In Fig. 6 ist der Punkt, an dem sich der Betonbrechabschnitt der ersten Zangenbacke und der Betonbrechabschnitt der zweiten Zangenbacke in der Draufsicht aus Fig. 6 überschneiden mit dem Bezugszeichen 14a = 19a versehen, da dieser Überschneidungspunkt für die Auffächerung und das Schneiden der Armierung wie ein Vorsprung wirkt. Wie in Fig. 6 gut zu erkennen ist, werden die Schnittsektoren, die mit S1 bis S4 bezeichnet sind, jeweils von mindestens zwei an der selben Zangenbacke angeordneten Vorsprüngen und an jeder der Zangenbacken von jeweils zwei konkaven Abschnitten begrenzt. Für den Schnittsektor S1 sind es die beiden Vorsprünge 19b und die beiden konkaven Abschnitte 20a der zweiten Zangenbacke und die beiden konkaven Abschnitte 15a der ersten Zangenbacke (von denen in der seitlichen Ansicht aus Fig. 6 jeweils immer nur einer dargestellt ist). Für den Schnittsektor S2 sind das die vier Vorsprünge 19b, 19c und die zwei konkaven Abschnitte 20b an der zweiten Zangenbacke und die zwei Zähne 14b und der konkave Abschnitt 15 der ersten Zangenbacke.

Aufgrund der oben beschriebenen, den Linien LA bzw. LB entsprechenden Anordnung der tiefsten Punkte bzw. der stetigen Krümmung der konkaven Abschnitte 15 bzw. 20 werden die in einem näher an dem Gelenk 3 gelegenen Schnittsektor zu schneidenden Armierungsstränge durchgeschnitten, bevor die Armierungsstränge in einem benachbarten Schnittsektor mit größerem Abstand von dem Gelenk 3 geschnitten werden. D.h. die Armierungsstränge werden bei der Schließbewegung der Zange sukzessive geschnitten. Dazu ist es, wie oben ausgeführt wurde, notwendig, daß mindestens eine der Zangenbacken eine derartige Anordnung der konkaven Abschnitte aufweist, während bei der anderen Zangenbacke die entsprechende Hüllkurve auch z.B. eine der Tangente EA bzw. EB entsprechende Gerade oder einen entsprechend mit zunehmenden Abstand von der Achse des Gelenks abnehmenden Abstand von der Winkelhalbierenden aufweisen kann. Dann muß allerdings die Abnahme des Abstandes von der Winkelhalbierenden kleiner als die Zunahme bei der anderen Hüllkurve sein, damit der sukzessive Schnitt der Armierungen gewährleistet ist. Der Schnittpunkt der beiden Hüllkurven muß also mit abnehmendem Öffnungswinkel α einen stetig zunehmenden Abstand von der Achse des Gelenks 3 aufweisen.

Weiterhin sind die konkaven Abschnitte mit einem stetigen Verlauf derartig ausgebildet, daß die Armierungsstränge, die im wesentlichen parallel zu der Achse des Gelenkes 3 verlaufen, mit abnehmendem Öffnungswinkel zwischen den beiden Zangenbacken in der zu der Achse des Gelenkes 3 senkrechten Richtung nebeneinander liegend ausgerichtet werden. Dabei werden die Armierungsstränge, die in einem Schnittsektor der zu der Achse des Gelenkes 3 senkrechten Richtung nicht nebeneinander liegend ausgerichtet werden können, sukzessive in den nächsten benachbarten Schnittsektor geschoben. Derart wird in einem Schnittsektor im wesentlichen nur eine solche Anzahl von Armierungssträngen geschnitten, die der ungefähren Länge eines der den Schnittsektor begrenzenden konkaven Abschnitte des Schnittsektors geteilt durch den Durchmesser der Armierungsstränge entspricht. Damit die Zahl der in einem Schnittsektor im wesentlichen gleichzeitig zu schneidenden Armierungsstränge mit zunehmendem Abstand der Schnittsektoren von der Achse des Gelenkes 3 abnimmt, sind die Vorsprünge an mindestens einer Zangenbacke (in Fig. 6 die zweite Zangenbacke 2 mit dem Grundkörper 16) derart angeordnet, daß der Abstand zwischen zwei benachbarten Vorsprüngen, dessen Betrag geteilt durch den Durchmesser der Armierungen im wesentlichen die Zahl der gleichzeitig zu schneidenden Armierungsstränge bestimmt, ungefähr antiproportional zum Abstand des tiefsten Punktes (des Berührungspunktes von Hüllkurve und konkavem Abschnitt) des durch die beiden Vorsprünge begrenzten konkaven Abschnittes von der Achse des Gelenkes 3 ist. Derart ist die Zahl der im wesentlichen gleichzeitig in einem Schnittsektor zu schneidenden Armierungsstränge ungefähr antiproportional zum Abstand des Schnittsektors von der Achse des Gelenkes 3. Da aber die zu dem im wesentlichen gleichzeitigen Schneiden der entsprechenden Anzahl von Armierungssträngen in dem Schnittsektor zur Verfügung stehende Schneidkraft entsprechend dem Hebelgesetz ebenfalls im wesentlichen antiproportional zum Abstand von der Achse des Gelenkes 3 ist, kann die Schneidleistung durch eine derartige Anordnung der Zähne und der konkaven Abschnitte im wesentlichen über den gesamten Schneidvorgang konstant gehalten werden und die effektiv zur Verfügung stehende Schneidkraft wird über den gesamten Schneidevorgang optimal genutzt.

Die Fig. 7A bis 7D zeigen in vier Darstellungen mit abnehmendem Öffnungswinkel zwischen den beiden Zangenbacken 1, 2 das mit abnehmendem Öffnungswinkel sukzessive Auffächern und Zerschneiden von zwölf schematisch dargestellten Armierungssträngen. Der Beton, in dem die Armierungsstränge eingebettet sind und der bereits vor dem Schneiden im wesentlichen gebrochen ist, ist in der Darstellung aus den Fig. 7A bis 7D nicht gezeigt. Die zwölf ungefähr parallel zu der Achse des Gelenkes 3 verlaufenden Armierungsstränge sind im nicht-geschnittenen Zustand schraffiert und im geschnittenen Zustand vollflächig schwarz dargestellt.

Wie in Fig. 7A zu sehen ist, befinden sich acht der zwölf Armierungsstränge anfänglich in dem von den Vorsprüngen 14b und 19b begrenzten und der Achse des Gelenkes 3 am nächsten gelegenen Schnittsektor S1. Bei der Schließbewegung der Zange werden diese Armierungsstränge durch den stetig gekrümmten Verlauf der konkaven Abschnitte 15a, 20a in der zu der Achse des Gelenkes 3 senkrechten Richtung nebeneinander liegend ausgerichtet. Daher sind, wie in Fig. 7B gezeigt ist, mit zunehmender Schließbewegung in dem der Achse des Gelenkes 3 am nächsten gelegenen Schnittsektor nur noch fünf nebeneinander liegend ausgerichtete Armierungsstränge zu schneiden. Die Zahl der zu schneidenden Armierungsstränge entspricht ungefähr der Länge der in dem Schnittsektor befindlichen Abschnitte der Schneiden 11, 17 geteilt durch den Durchmesser der Armierungsstränge. Wie in Fig. 7C gezeigt ist, ist das Schneiden der fünf zuerst zu schneidenden Armierungsstränge im wesentlichen abgeschlossen, bevor in dem von den Vorsprüngen 19b und 19c begrenzten benachbarten Schnittsektor die wesentliche Schneidleistung zu erbringen ist. Wie in Fig. 7C gut zu erkennen ist, wird in dem von den Vorsprüngen 19b und 19c begrenzten Schnittsektor eine Anzahl von vier Armierungssträngen geschnitten, während in dem nächsten benachbarten Schnittsektor dann die verbleibenden drei Armierungsstränge zu schneiden sind. Die drei zuletzt zu schneidenden Armierungsstränge werden, wie sich aus dem in Fig. 7C gezeigten noch sehr großen Abstand der Schneiden 11, 17 ergibt, erst geschnitten, nachdem das Schneiden der vier zuvor zu schneidenden Armierungsstränge im wesentlichen abgeschlossen ist. Fig. 7D zeigt den Zustand, bei dem die zwölf dargestellten Armierungsstränge vollständig durchschnitten sind.

## Patentansprüche

1. Betonbrechzange mit
einer ersten Zangenbacke (1), die einen rahmenförmigen ersten Grundkörper (9) mit zwei Seitenabschnitten (9a, 9b), einem gelenkseitigen Abschnitt (9c) und einem dem gelenkseitigen Abschnitt (9c) gegenüberliegenden Abschnitt (9d), die einen Innenraum (50) der ersten Zangenbacke (1) umgeben, und eine Schneideinrichtung mit einer ersten Schneide (11) aufweist, und
einer zweiten Zangenbacke (2),die eine Schneideinrichtung mit einer zweiten Schneide (17) aufweist und mit der ersten Zangenbacke (1) um ein Gelenk (3) schwenkbar verbunden ist und beim Schneiden in den Inneraum (50) eintaucht,
wobei die zweite Zangenbacke (2) einen Betonbrechabschnitt (18) aufweist, der gegenüber der zweiten Schneide (17) in Richtung der ersten Zangenbacke (1) hervorsteht, und die zweite Zangenbacke (2) im Betrieb das gebrochene Material durch den Innenraum (50) schiebt,
dadurch gekennzeichnet,
daß die erste Zangenbacke (1) einen Betonbrechabschnitt (13), der gegenüber der ersten Schneide (11) in Richtung der zweiten Zangenbacke (2) hervorsteht, aufweist und im Betrieb zunächst die beiden Betonbrechabschnitte (13, 18) zum Brechen des Betons und anschließend die Schneiden (11, 17) zum Schneiden von Armierungen zusammenwirken,
daß mindestens einer der Abschnitte (9a, 9b, 9c, 9d) einen einen Hohlraum einschließenden Querschnitt aufweist und so einen Torsionskasten bildet, und
daß der Innenraum (50) sich in der Richtung des Eintauchens der zweiten Zangenbacke (2) erweitert.

2. Betonbrechzange nach Anspruch 1, dadurch gekennzeichnet,
daß der Betonbrechabschnitt (13) der ersten Zangenbacke (1) Vorsprünge (14) und konkave Abschnitte (15) und dabei zwischen benachbarten Vorsprüngen (14, 14b, 14A) jeweils einen konkaven Abschnitt (15, 15b, 15c) und in den seitlichen Abschnitten der ersten Zangenbacke (1) jeweils auf der dem Gelenk (3) zugewandten Seite des dem Gelenk (3) jeweils am nächsten liegenden Vorsprunges (14b) ebenfalls einen konkaven Abschnitt (15a) aufweist, und
daß der Abstand, den eine die konkaven Abschnitte (15, 15a, 15b, 15c) der ersten Zangenbacke (1) tangierende Hüllkurve (LA) durch die Achse des Gelenks (3) von einer Tangentenebene (EA) des dem Gelenk (3) am nächsten liegenden konkaven Abschnitts (15a) durch die Achse des Gelenks (3) in der der zweiten Zangenbacke (2) abgewandten Richtung aufweist, mit zunehmender Entfernung von der Achse des Gelenks (3) zunimmt.

3. Betonbrechzange nach Anspruch 1 oder 2, dadurch gekennzeichnet,
daß der Betonbrechabschnitt (18) der zweiten Zangenbacke (2) Vorsprünge (19) und konkave Abschnitte (20) und dabei zwischen benachbarten Vorsprüngen (19, 19b-19e) jeweils einen konkaven Abschnitt (20, 20b, 20c, 20d) und in den seitlichen Abschnitten der zweiten Zangenbacke (2) jeweils auf der dem Gelenk (3) zugewandten Seite des dem Gelenk (3) jeweils am nächsten liegenden Vorsprunges (19b) ebenfalls einen konkaven Abschnitt (20a) aufweist, und
daß der Abstand, den eine die konkaven Abschnitte (20, 20a-d) der zweiten Zangenbacke (2) tangierende Hüllkurve (LB) durch die Achse des Gelenks (3) von einer Tangentenebene (EB) des dem Gelenk (3) am nächsten liegenden konkaven Abschnitts (20a) durch die Achse des Gelenks (3) in der der ersten Zangenbacke (1) abgewandten Richtung aufweist, mit zunehmender Entfernung von der Achse des Gelenks (3) zunimmt.

4. Betonbrechzange nach einem der Ansprüche 1 bis 3, dadurch gekennzeichnet,
daß die erste Zangenbacke (1) als Gußteil ausgebildet ist, und
daß der den Hohlraum einschließende Querschnitt eines Abschnittes (9a bis 9d) der ersten Zangenbacke (1) im wesentlichen die Form eines nach außen gerichteten C mit einem vertikalen Abschnitt und jeweils mit diesem verbundenen oberen und unteren sich horizontal erstreckenden Steg und einen mit dem C verbundenen Außenabschnitt aufweist.

5. Betonbrechzange nach einem der Ansprüche 1 bis 4, dadurch gekennzeichnet,
daß die zweite Zangenbacke (2) einen zweiten Grundkörper (16) aufweist, der in der Ebene der Schwenkbewegung um das Gelenk (3) einen Abschnitt (23) mit einem im wesentlichen dreieckigen Querschnitt aufweist, dessen Eckpunkte von dem Gelenk (3), einem Anlenkpunkt (8) für eine Einrichtung (4) zum Schwenken der zweiten Zangenbacke (2) um das Gelenk (3) und einer dem Gelenk (3) gegenüberliegenden Vorderseite des zweiten Grundkörpers (16) gebildet werden,
daß der Abschnitt (23) mit dem im wesentlichen dreieckigen Querschnitt in der Schwenkebene einen aus drei eine Ausnehmung (22) einschließenden Schenkelabschnitten gebildet ist, und
daß die zweite Zangenbacke (2) auf der der ersten Zangenbacke (1) abgewandten Seite senkrecht zu der Ebene der Schwenkbewegung der zweiten Zangenbacke (2) einen im wesentlichen U-förmigen Querschnitt aufweist.

6. Betonbrechzange nach einem der Ansprüche 1 bis 5, dadurch gekennzeichnet,
daß die Form der Ecken an der Innenseite der rahmenförmigen ersten Zangenbacke (1) abgerundet ist,
daß der Betonbrechabschnitt (13) der ersten Zangenbacke (1) mindestens teilweise mit einer hochvergüteten Schicht mit einem hohen Härtegrad vergütet ist, und
daß der Betonbrechabschnitt (18) der zweiten Zangenbacke (2) mindestens teilweise mit einer hochvergüteten Schicht mit einem hohen Härtegrad vergütet ist.

7. Betonbrechzange nach einem der Ansprüche 1 bis 6, dadurch gekennzeichnet,
daß die Schneide (11) der ersten Zangenbacke (1) einen mehrschichtigen Aufbau aufweist,
daß die Schneide (11) der ersten Zangenbacke (1) aufgeschweißt ausgebildet ist,
daß die Schneide (17) der zweiten Zangenbacke (2) einen mehrschichtigen Aufbau aufweist, und
daß die Schneide (17) der zweiten Zangenbacke (2) aufgeschweißt ausgebildet ist.

8. Betonbrechzange nach einem der Ansprüche 1 bis 7, dadurch gekennzeichnet,
daß gegenüber einer ersten Ebene durch die Schwenkachse des Gelenks (3) und einen Punkt (30) der ersten Schneide (11) mindestens ein Punkt (31) des Betonbrechabschnittes (13) der ersten Zangenbacke (1), der in einer zu der Schwenkachse (3) des Gelenks (3) paralellen, zu der ersten Ebene senkrechten und durch den Punkt (30) der ersten Schneide (11) laufenden zweiten Ebene liegt und der zweiten Zangenbacke (2) zugewandt ist, in Richtung der Schwenkbewegung auf die zweite Zangenbacke (2) gesehen vor der ersten Ebene angeordnet ist, und
daß gegenüber einer dritten Ebene durch die Schwenkachse des Gelenks (3) und einen Punkt (40) der zweiten Schneide (17) mindestens ein Punkt (41) des Betonbrechabschnittes (18) der zweiten Zangenbacke (2), der in einer zu der Schwenkachse des Gelenks (3) paralellen, zu der dritten Ebene senkrechten und durch den Punkt (40) der zweiten Schneide (17) laufenden vierten Ebene liegt und der ersten Zangenbacke (1) zugewandt ist, in Richtung der Schwenkbewegung auf die erste Zangenbacke (1) gesehen vor der dritten Ebene angeordnet ist.

9. Betonbrechzange nach einem der Ansprüche 1 bis 8, dadurch gekennzeichnet,
daß der Betonbrechabschnitt (13) der ersten Zangenbacke (1) mit in Richtung der zweiten Zangenbacke (2) vorstehenden Vorsprüngen (14) ausgebildet ist, von denen an den zwei dem Gelenk (3) gegenüberliegenden Ecken der rahmenförmigen ersten Zangenbacke (1) je einer als ein in Richtung der zweiten Zangenbacke vorstehender Eckvorsprung (14A) vorgesehen ist,
daß die zweite Zangenbacke (2) einen beim Schneiden in die erste Zangenbacke eintauchenden ersten Abschnitt aufweist, und
daß nahe des Außenrandes des ersten Abschnittes der Betonbrechabschnitt (18) der zweiten Zangenbacke (2) mit in Richtung der ersten Zangenbacke (1) vorstehenden Vorsprüngen (19) ausgebildet ist.

10. Betonbrechzange nach einem der Ansprüche 2 bis 9, dadurch gekennzeichnet,
daß die konkaven Abschnitte (15, 20) und die Vorsprünge (14, 15) der beiden Betonbrechabschnitte (13, 18) relativ zueinander und relativ zu den Schneiden (11, 17) derart angeordnet sind,
daß bei der Schwenkbewegung zum Eintauchen der zweiten Zangenbacke (2) in die erste Zangenbacke (1) die in einem Schnittsektor, der von mindestens zwei an der selben Zangenbacke angeordneten Vorsprüngen und jeweils zwei konkaven Abschnitten an beiden Zangenbacken begrenzt wird, eingeschlossenen Armierungen im wesentlichen vollständig geschnitten sind, bevor die im Fortgang der Schwenkbewegung zu schneidenden Armierungen geschnitten werden.

11. Betonbrechzange nach einem der Ansprüche 2 bis 10, dadurch gekennzeichnet,
daß die konkaven Abschnitte (15, 20) jeweils einen stetig gekrümmten Verlauf aufweisen,
daß die bei der Schwenkbewegung der Zangenbacken (1, 2) zusammenwirkenden konkaven Abschnitte (15, 20) und Vorsprünge (14, 19) die Armierungen derart auf fächern, daß die einzelnen parallel zur Achse des Gelenkes (3) verlaufenden Armierungen in einem Schnittsektor in einer zu der Achse des Gelenkes (3) senkrechten Richtung im wesentlichen nebeneinander ausgerichtet werden, und
daß der Abstand zwischen jeweils zwei in einer zu der Achse des Gelenkes (3) senkrechten Richtung benachbarten Vorsprüngen (14a-14b, 14b-14c; 19a-19b, 19b-19c, 19c,19b, 19d-19e) der Vorsprünge (14; 19) an einer der Zangenbacken (1; 2) im wesentlichen antiproportional zu dem Abstand des Berührpunktes zwischen der Hüllkurve (LA, LB) und dem von den beiden entsprechenden Vorsprüngen begrenzten konkaven Abschnitt (15a, 15b; 20a, 20b, 20c, 20d) von der Achse des Gelenks (3) abnimmt.

## Claims

1. Concrete-crushing tongs, comprising
a first tong jaw (1) including a first framework-shaped base body (9) with two lateral sections (9a, 9b), a section (9c) on the side of the joint, and a section (9d) opposite to said section (9c) on the side of the joint, which surround an inside space (50) of said first tong jaw (1), as well as a cutting means having a first crushing edge (11), and
a second tong jaw (2) including a cutting means with a second crushing edge (17) and connected to first tong jaw (1) so as to swivel about a joint (3) while plunging into said inside space (50) during the cutting operation,
wherein said second tong jaw (2) comprises a concrete-crushing (18) projecting beyond said second crushing edge (17) in a direction towards said first tong jaw (1), and in operation pushes the crushed material through said inside space (50),
**characterized in**
that said first tong jaw (1) comprises a concrete-crushing section (13) projecting beyond said first crushing edge (11) in a direction towards said second tong jaw (2), and that in operation first said concrete-crushing sections (13, 18) co-operate for crushing the concrete, and then said crushing (11, 17) co-operate for cutting the reinforcements,
that at least one of said sections (9a, 9b, 9c, 9d) has a cross-section enclosing a hollow space so as to form a torsion case, and
that said inside space (50) is flaring in a plunging direction of said second tong jaw (2).

2. Concrete-crushing tongs according to Claim 1,
**characterized in**
that said concrete-crushing section (13) of said first tong jaw (1) comprises projections (14) and concave sections (15), with a respective concave section (15, 15b, 15c) between adjacent projections (14, 14b, 14A), and equally a concave section (15a) in said lateral sections of said first tong jaw (1) on the side of the projection (14b) closest to said joint, which is respectively turned towards the joint (3), and
in that the spacing formed by an envelope curve (LA) tangential on said concave sections (15, 15a, 15b, 15c) of said first tong jaw (1) through the swivel axis of said joint (3) from a tangential plane (EA) of the concave section (15a) closest to said joint (3) through the swivel axis of said joint (3) in a direction turned away from said second tong jaw (2), increases as the distance from the swivel axis of said joint (3) increases.

3. Concrete-crushing tongs according to Claim 1 o4 2,
**characterized in**
that said concrete-crushing section (18) of said second tong jaw (2) comprises projections (19) and concave sections (20), with a respective concave section (20, 20b, 20c, 20d) between adjacent projections (19, 19b à 19e) and equally a concave section (20a) in said lateral sections of said second tong jaw (2) on the side of the projection (19b) closest to said joint, which is turned respectively towards the joint (3), and
in that the spacing formed by an envelope curve (LB) tangential on said concave sections (20, 20a à 20d) of said second tong jaw (2) through the swivel axis of said joint (3) from a tangential plane (EB) of the concave section (20a) closest to said joint (3) through the swivel axis of said joint (3) in a direction leading away from said first tong jaw (1) increases as the distance of the swivel axis from the swivel axis of said joint (3) increases.

4. Concrete-crushing tongs according to any of the Claims 1 to 3,
**characterized in**
that said first tong jaw (1) is provided in the form of a casting, and that the cross-section enclosing said hollow space, of a section (9a à 9d) of said first tong jaw (1) presents substantially the shape of a C turned outside with a vertical section and an upper and a lower horizontal bar respectively connected thereto, and an outside section connected to said C.

5. Concrete-crushing tongs according to any of the Claims 1 to 4,
**characterized in**
that said second tong jaw (2) has a second base body (16) including a section (23) of substantially triangular cross-section in the plane of the swivelling movement about said joint (3), whereof the angular points are formed by said joint (3), by a pivotal point (8) of a means (4) for swivelling said second tong jaw about said joint (3), and by a front side of said second base body (16) which is opposite to said joint,
in that said section (23) of substantially triangular cross-section is formed in the swivelling plane by one of the three side sections enclosing a hollow (22), and
in that said second tong jaw (2) presents a substantially U-shaped cross-section on the side turned away from said first tong jaw (1), which is orthogonal the plane of the swivelling movement of said second tong jaw (2).

6. Concrete-crushing tongs according to any of the Claims 1 to 5,
**characterized in**
that the shape of the angles on the inner side of said framework-shaped first tong jaw (1) is rounded,
that said concrete-crushing section (13) of said second tong jaw (2) is heat-treated, at least in parts, with a highly tempered layer presenting a high degree of hardness, and in
that said concrete-crushing section (18) of said second tong jaw (2) is heat-treated, at least in parts, with a highly tempered layer presenting a high degree of hardness.

7. Concrete-crushing tongs according to any of the Claims 1 to 6,
**characterized in**
that the crushing edge (11) of said first tong jaw (1) has a multi-layer structure,
that the crushing edge (11) of said first tong jaw (1) has a welded structure,
that the crushing edge (17) of said second tong jaw (2) has a multi-layer structure, and in
that the crushing edge (17) of said second tong jaw (2) has a welded structure.

8. Concrete-crushing tongs according to any of the Claims 1 to 7,
**characterized in**
that at least one point (31) of said concrete-crushing section (13) of said first tong jaw (1) is disposed in opposition to a first plane passing through the swivel axis of said joint (3) and through a point (30) of said first crushing edge (11) which point is located in a second plane parallel to the swivel axis (3) of said joint, orthogonal on said first plane and passing through the point (30) of said first crushing edge (11), which at least one point is turned towards said second tong jaw (2) and located, seen in the direction of the swivelling movement towards said second tong jaw (2), in front of said first plane, and in
that at least one point (41) of said concrete-crushing section (18) of said second tong jaw (2) is disposed in opposition to a third plane passing through the swivel axis of said joint (3) and through a point (40) of said second crushing edge (17), which point is located in a fourth plane orthogonal on said plane and parallel to said swivel axis of the joint (3) and passing through the point (40) of said second crushing edge (17), while it is turned towards said first tong jaw (1) which is located, seen in the direction of the swivelling movement towards said first tong jaw (1), on front of said third plane.

9. Concrete-crushing tongs according to any of the Claims 1 to 8,
**characterized in**
that said concrete-crushing section (13) of said first tong jaw (1) is designed to present projections (14) which project towards said second tong jaw (2), whereof a respective one is formed as angular projection (14A) which projects towards said first framework-shaped tong jaw (1) whilst it is disposed at the two angles opposite to said joint (3),
that said second tong jaw (2) presents a first section which plunges into said first tong jaw during the cutting operation, and in
that said first concrete-crushing section (18) of said second tong jaw (2), in the vicinity of the outside edge of said first section, presents projections (19) which project towards said first tong jaw (1).

10. Concrete-crushing tongs according to any of the Claims 2 to 9,
**characterized in**
that said concave sections (15, 20) and said projections (14, 15) of said two concrete-crushing sections (13, 18) are disposed relative to each other and to said crushing (11, 17) in a way that during the swivelling movement for the plunging movement of said second tong jaw (2) into said first tong jaw (1) the reinforcements, which are enclosed within a cutting sector defined by at least two projections disposed at the same tong jaw and by two respective concave sections at said two tong jaws, are cut substantially completely prior to cutting of the reinforcements to be cut during the continuing swivelling movement.

11. Concrete-crushing tongs according to any of the Claims 2 to 10,
**characterized in**
that each of said concave sections (15, 20) presents a continuously curved shape, that said concave sections (15, 20) and said projections (14, 19), which co-operate during the swivelling movement of said tong jaws (1, 2), spread the reinforcements in a fan-shaped manner such that the individual reinforcements extending in parallel to the swivel axis of said joint (3) are substantially aligned in a side-by-side relationship in a direction orthogonal on the swivel axis of said joint (3) in a cutting sector, and in
that the spacing between two respective projections (14a-14b, 14b-14c; 19a-19b, 19b-19c, 19c-19b, 19d-19e) among said projections (14; 19) on one of said tong jaws (1; 2), which are adjacent in a direction orthogonal on the swivel axis of said joint (3), decreases substantially in a relationship anti-proportional relative to the spacing between the contact point between said envelope curve (LA, LB) and said concave section (15a, 15b; 20a, 20b, 20c, 20d) defined by said two corresponding projections, on the one part, and the swivel axis of said joint (3), on the other part.

## Revendications

1. Tenaille à broyer du béton, comprenant
un premier bec de tenaille (1) qui comprend un premier corps de base (9) sous forme de cadre à deux parties latérales (9a, 9b), une partie (9c) du côté de l'articulation, et une partie (9d) opposée à ladite partie (9c) du côté de l'articulation, qui entourent une espace intérieur (50) dudit premier bec de tenaille (1), ainsi qu'un moyen de coupe à un premier tranchant (11), et
un deuxième bec de tenaille (2) qui comprend un moyen de coupe à un deuxième tranchant (17) et qui est relié audit premier bec de tenaille (1) de façon à pivoter autour d'une articulation (3), en descendant dans ledit espace intérieur (50) au cours de l'opération de coupage,
dans lequel ledit deuxième bec de tenaille (2) comprend une partie broyeur de béton (18) qui fait saillie dudit deuxième tranchant (17) en une direction vers ledit premier bec de tenaille (1), et, en marche, pousse le matériel broyé à travers ledit espace intérieur (50),
**caractérisée en ce**
que ledit premier bec de tenaille (1) comprend une partie broyeur de béton (13) qui fait saillie dudit premier tranchant (11) en une direction vers ledit deuxième bec de tenaille (2), et en ce qu'en marche d'abord lesdites parties broyeurs de béton (13, 18) coopèrent à broyer le béton, et ensuite lesdits tranchants (11, 17) coopèrent à couper des armatures,
en ce qu'au moins une desdites parties (9a, 9b, 9c, 9d) a un profil transversal renfermant un creux, de façon à former une caisse à torsion, et
en ce que ledit espace intérieur (50) s'élargit en direction de la descente dudit deuxième bec de tenaille (2).

2. Tenaille à broyer du béton selon la revendication 1, **caractérisée** en ce que
ladite partie broyeur de béton (13) dudit premier bec de tenaille (1) comprend des bosses (14) et des parties concaves (15), à une partie concave respective (15, 15b, 15c) entre des bosses voisines (14, 14b, 14A) et aussi à une partie concave (15a) dans lesdites parties latérales du premier bec de tenaille (1) du côté de la bosse (14b) la plus proche à ladite articulation, qui est respectivement tourné vers l'articulation (3), et
en ce que l'écart, qui est formé par une enveloppante (LA) tangentielle auxdites parties concaves (15, 15a, 15b, 15c) dudit premier bec de tenaille (1), à travers le pivot de ladite articulation (3) à partir d'un plan tangentiel (EA) de la partie concave (15a) la plus proche à ladite articulation (3) par le pivot de ladite articulation (3) en une direction détournée dudit deuxième bec de tenaille (2), devient plus grand à une croissance de la distance du pivot de ladite articulation (3).

3. Tenaille à broyer du béton selon la revendication 1 ou 2, **caractérisée en ce**
que ladite partie broyeur de béton (18) dudit deuxième bec de tenaille (2) comprend des bosses (19) et des parties concaves (20), à une partie concave respective (20, 20b, 20c, 20d) entre des bosses voisines (19, 19b à 19e) et aussi à une partie concave (20a) dans lesdites parties latérales du deuxième bec de tenaille (2) du côté de la bosse (19b) la plus proche à ladite articulation, qui est respectivement tourné vers l'articulation (3), et
en ce que l'écart, qui est formé par une enveloppante (LB) tangentielle auxdites parties concaves (20, 20a à 20d) dudit deuxième bec de tenaille (2), à travers le pivot de ladite articulation (3) à partir d'un plan tangentiel (EB) de la partie concave (20a) la plus proche à ladite articulation (3) par le pivot de ladite articulation (3) en une direction détournée dudit premier bec de tenaille (1), devient plus grand à une croissance de la distance du pivot de ladite articulation (3).

4. Tenaille à broyer du béton selon une quelconque des revendications 1 à 3,
**caractérisée en ce**
que ledit premier bec de tenaille (1) est conçu comme pièce moulée en fonte, et en ce que le profil transversal, qui renferme ledit creux, d'une partie (9a à 9d) du premier bec de tenaille (1) présente essentiellement une forme en C tourné à l'extérieur, à une partie verticale et à une entretoise supérieure respectivement y reliée et une entretoise inférieure horizontale, ainsi qu'une partie extérieure reliée audit C.

5. Tenaille à broyer du béton selon une quelconque des revendications 1 à
4, **caractérisée en ce**
que ledit deuxième bec de tenaille (2) a un deuxième corps de base (16) qui comprend une partie (23) à un profil essentiellement triangulaire dans le plan du mouvement pivotant autour de ladite articulation (3), dont les points angulaires sont formés par ladite articulation (3), un point d'articulation (8) d'un moyen (4) à pivoter ledit deuxième bec de tenaille autour de ladite articulation (3), et d'un côté avant dudit deuxième corps de base (16), qui est opposé à ladite articulation,
en ce que ladite partie (23) à profil essentiellement triangulaire est formée, dans le plan de pivotement, par une de trois parties de côté qui renferment un creux (22), et
en ce que ledit deuxième bec de tenaille (2) présente un profil essentiellement en U du côté détourné du premier bec de tenaille (1), orthogonale sur le plan du mouvement pivotant dudit deuxième bec de tenaille (2).

6. Tenaille à broyer du béton selon une quelconque des revendications 1 à 5,
**caractérisée en ce**
que la forme des angles à la face intérieure dudit premier bec de tenaille (1) en forme de cadre est arrondie,
que ladite partie broyeur de béton (13) dudit premier bec de tenaille (1) est traitée, au moins en partie, par une couche finement traitée à un haut degré de dureté, et en ce
que ladite partie broyeur de béton (18) dudit deuxième bec de tenaille (2) est traitée, au moins en partie, par une couche finement traitée à un haut degré de dureté.

7. Tenaille à broyer du béton selon une quelconque des revendications 1 à 6,
**caractérisée en ce**
que le tranchant (11) dudit premier bec de tenaille (1) a une structure à plusieurs couches,
que le tranchant (11) dudit premier bec de tenaille (1) a une structure soudée,
que le tranchant (17) dudit deuxième bec de tenaille (2) a une structure à plusieurs couches, et en ce
que le tranchant (17) dudit deuxième bec de tenaille (2) a une structure soudée.

8. Tenaille à broyer du béton selon une quelconque des revendications 1 à 7,
**caractérisée en ce**
qu'au moins un point (31) de ladite partie broyeur de béton (13) dudit premier bec de tenaille (1) est disposé en face d'un premier plan passant par le pivot de ladite articulation (3) et par un point (30) du premier tranchant (11), lequel point se trouve dans un deuxième plan parallèle audit premier plan, qui est orthogonal sur ledit premier plan et passe par le point (30) du premier tranchant (11), et est tourné en face dudit deuxième bec de tenaille (2), qui se trouve, vue en direction du mouvement pivotant vers ledit deuxième bec de tenaille (2), avant ledit premier plan, et en ce
qu'au moins un point (41) de ladite partie broyeur de béton (18) dudit deuxième bec de tenaille (2) est disposé en face d'un troisième plan passant par le pivot de ladite articulation (3) et par un point (40) du deuxième tranchant (17), lequel point se trouve dans un quatrième plan orthogonal sur ledit troisième plan en parallèle audit pivot de l'articulation (3 et passant par le point (40) du deuxième tranchant (17), en étant tourné en face dudit premier bec de tenaille (1), qui se trouve, vue en direction du mouvement pivotant vers ledit premier bec de tenaille (1), avant ledit troisième plan.

9. Tenaille à broyer du béton selon une quelconque des revendications 1 à 8,
**caractérisée en ce**
que ladite partie broyeur de béton (13) dudit premier bec de tenaille (1) est conçue avec des bosses (14) qui font saillie vers ledit deuxième bec de tenaille (2), dont respectivement une est formée comme bosse angulaire (14A) qui fait saillie vers ledit deuxième bec de tenaille (2) sous forme de cadre, en étant disposée aux deux angles opposés à ladite articulation (3),
que le deuxième bec de tenaille (2) présente une première partie qui descend dans ledit premier bec de tenaille au cours de l'opération d coupe, et en ce
que ladite première partie broyeur de béton (18) dudit deuxième bec de tenaille (2), à proximité du bord extérieur de ladite première partie, présente des bosses (19) qui font saillie vers ledit premier bec de tenaille (1).

10. Tenaille à broyer du béton selon une quelconque des revendications 2 à 9,
**caractérisée en ce**
que lesdites parties concaves (15, 20) et lesdits bosses (14, 15) desdites deux parties broyeurs de béton (13, 18) sont disposées l'une relativement à l'autre et relativement auxdits tranchants (11, 17) de façon qu'au cours du mouvement pivotant pour la descente dudit deuxième bec de tenaille (2) dans ledit premier bec de tenaille (1), les armatures, qui sont renfermées dans un secteur de coupe limité par au moins deux bosses disposées au même bec de tenaille et par respectivement deux parties concaves auxdits deux becs de tenaille, sont coupées essentiellement complètement avant la coupe des armatures à couper au cours du mouvement pivotant continué.

11. Tenaille à broyer du béton selon une quelconque des revendications 2 à 10,
**caractérisée en ce**
que chacune desdites parties concaves (15, 20) a un tracé à courbure continue,
que lesdites parties concaves (15, 20) et lesdites bosses (14, 19), qui coopèrent au cours du mouvement pivotant desdits becs de tenaille (1, 2), écartent les armatures en forme d'éventail de façon que les armatures individuelles, qui s'étendent en parallèle au pivot de ladite articulation (3) soient orientées essentiellement l'un à côté de l'autre en une direction orthogonal au pivot de ladite articulation (3) dans un secteur de coupe, et en ce
que l'écart entre respectivement deux bosses (14a-14b, 14b-14c; 19a-19b, 19b-19c, 19c-19b, 19d-19e) parmi lesdites bosses (14; 19) à un desdits becs de tenaille (1; 2), qui sont voisines selon une direction orthogonal au pivot de ladite articulation (3), décroît essentiellement selon une loi anti-proportionnelle à l'écart entre le point de contact entre ladite enveloppante (LA, LB) et de ladite partie concave (15a, 15b; 20a, 20b, 20c, 20d) limité par les deux bosses correspondantes, d'un côté, et le pivot de ladite articulation (3), d'autre côté.
